# EUROPÄISCHE PATENTSCHRIFT

(11) **EP 3 684 534 B1**
(45) Veröffentlichungstag und Bekanntmachung des Hinweises auf die Patenterteilung: **13.10.2021**
(21) Anmeldenummer: 18759084.9
(22) Anmeldetag: 21.08.2018
(51) Int. Cl.: B23B 5/32

(54) **UNTERFLUR-RADSATZBEARBEITUNGSMASCHINE MIT VERSTELLBARER SPURWEITE**
UNDER-FLOOR WHEELSET PROCESSING MACHINE HAVING ADJUSTABLE TRACK WIDTH
MACHINE SOUTERRAINE D'USINAGE D'ESSIEUX AVEC LARGEUR DE VOIE AJUSTABLE

(30) Priorität: 22.09.2017 DE 102017122023
(43) Veröffentlichungstag der Anmeldung: 29.07.2020
(73) Patentinhaber: HEGENSCHEIDT-MFD GmbH, 41812 Erkelenz (DE)
(72) Erfinder: NAUMANN, John Oliver, 41849 Wassenberg (DE)
(74) Vertreter: Cohausz & Florack
(86) Internationale Anmeldenummer: PCT/EP2018/072486
(87) Internationale Veröffentlichungsnummer: WO 2019/057420

(56) Entgegenhaltungen:
- WO-A2-02/094485
- DE-A1-102006 007 137
- DE-U1- 20 214 942
- DE-U1- 20 319 063

## Beschreibung

Die Erfindung betrifft eine Unterflur-Radsatzbearbeitungsmaschine, insbesondere Unterflur-Radsatzdrehmaschine zum Reprofilieren von Rädern und Bremsscheiben von Radsätzen von Schienenfahrzeugen, umfassend: einen Maschinenständer, einen Querbalken zur Überbrückung eines Werkstattgleises mit wenigstens zwei Schienen in Querrichtung, zwei Rollenträger, wenigstens vier Reibrollen, wenigstens einen Reibrollenantrieb zum Antreiben der Reibrollen, und wenigstens eine Axialführungsrolle zur axialen Führung des Radsatzes, wobei der Maschinenständer einen ersten Teil und einen zweiten Teil aufweist, wobei der Querbalken an beiden Teilen des Maschinenständers gelagert ist, wobei die Rollenträger beweglich mit dem Maschinenständer verbunden sind, und wobei die Reibrollen drehbar an dem Rollenträger gelagert sind.

Unterflur-Radsatzdrehmaschinen sind in unterschiedlichen Ausgestaltungen aus dem Stand der Technik bekannt, beispielsweise aus der DE 10 2006 007137 A1 oder der DE 202 14 942 U1 derselben Anmelderin.

Üblicherweise sind Unterflur-Radsatzdrehmaschinen wie auch andere Radsatzbearbeitungsmaschinen in einer Grube unterhalb eines Werkstattgleises angeordnet. Die zu reprofilierenden Radsätze werden über das Werkstattgleis in einem Schienenfahrzeug eingebaut oder per Kran im ausgebauten Zustand in die Maschine eingebracht. Für die Reprofilierung der Räder, wie auch der Bremsscheiben, werden die Radsätze von zwei mal zwei Reibrollen an den Laufflächen angetrieben. Zugleich werden die Radsätze von Fixierungen an ihren Achslagergehäusen gehalten. Zur Erzielung einer höchstmöglichen Bearbeitungsgenauigkeit unter Berücksichtigung einer hohen dynamischen Steifigkeit der Unterflur-Radsatzdrehmaschine werden die Radsätze beispielsweise an ihren Achslagergehäusen zentriert und über Axialführungsrollen in Achsrichtung geführt. Derartige Unterflur-Radsatzdrehmaschinen sind beispielsweise geeignet für:
- das Überdrehen der Räder von den Laufflächen bis zur Spurkranzkuppe und der Spurkranzrückenseite,
- die Profilbearbeitung sowie die Bearbeitung der inneren Radstirnflächen,
- eine einseitige Reprofilierung eines Radsatzes,
- die Bearbeitung von Wellenbremsscheiben und auch von Radbremsscheiben, und
- die Bearbeitung der äußeren Seitenfläche des Radprofils.

Das chinesische Gebrauchsmuster CN 101125370 A derselben Anmelderin zeigt beispielsweise eine Unterflur-Radsatzdrehmaschine zum Reprofilieren von Rädern und Bremsscheiben von Radsätzen von Eisenbahnfahrzeugen. Die dort beschriebene Unterflur-Radsatzdrehmaschine zeichnet sich dadurch aus, dass die Unterflur-Radsatzdrehmaschine einen waagerechten Querbalken hat, der auf zwei ortsfesten Maschinenständern ruht, die auf dem Boden unterhalb eines Werkstattgleises stehen, indem sich der Querbalken unter einem rechten Winkel quer zum Werkstattgleis erstreckt und mit seinen beiden äußeren Enden jeweils seitlich über das Werkstattgleis hinausragt, wobei der Querbalken einen annähernd rechteckigen Querschnitt hat, dessen Oberseite unterhalb des Werkstattgleises liegt und Halter für zwei Axialführungsrollen für einen Radsatz trägt, und dessen eine Längsseite zwei horizontale Längsführungen aufweist, die parallel zueinander verlaufen und einen vertikalen Abstand voneinander haben und in denen zwei Werkzeugsupporte und zwei Fixierungen für die Lagergehäuse des Radsatzes, längsbewegbar geführt sind, während an den beiden äußeren Enden des Querbalkens jeweils ein Reibrollenantrieb für jeweils zwei drehbar antreibbare Reibrollen vorgesehen ist, die an der Lauffläche eines jeden Rades des Radsatzes angreifen.

Eine Unterflur-Radsatzbearbeitungsmaschine gemäß dem Oberbegriff des Anspruchs 1 ist aus WO 02/094485 A2 bekannt.

Ein Nachteil dieser Unterflur-Radsatzdrehmaschine liegt darin, dass keine einfache Anpassung an unterschiedliche Spurweiten vorgesehen ist. Als Spurweite wird im Schienenverkehr der Abstand zwischen den Gleisen bezeichnet, meist zwischen den Innenkanten der Schienenköpfe eines Gleises. International werden aus wirtschaftlichen und militärischen Gründen traditionell sehr unterschiedliche Spurweiten eingesetzt. In der Bundesrepublik Deutschland beträgt die Standard-Spurweite ("Normalspur") beispielsweise 1435 mm. Auch innerhalb eines Landes können unterschiedliche Spurweiten eingesetzt werden, beispielsweise bei Schmalspurbahnen im Vergleich zu Normalspurbahnen. Die Radsätze von Schienenfahrzeugen sind bis auf wenige Ausnahmen für den Einsatz auf einer bestimmten Spurweite ausgelegt. Daher bieten Unterflur-Radsatzdrehmaschinen mit fester, nicht verstellbarer Spurweite nur ein eingeschränktes Einsatzgebiet.

Vor diesem Hintergrund liegt der Erfindung die Aufgabe zu Grunde, eine vielseitig verwendbare Radsatzbearbeitungsmaschine, insbesondere Radsatzdrehmaschine zu schaffen, die auf einfache Weise an Radsätze mit unterschiedlichen Spurweiten angepasst werden kann.

Diese Aufgabe wird durch eine Unterflur-Radsatzbearbeitungsmaschine Patentanspruch 1 gelöst.

Die Erfindung betrifft eine Unterflur-Radsatzbearbeitungsmaschine, insbesondere Unterflur-Radsatzdrehmaschine zum Reprofilieren von Rädern und Bremsscheiben von Radsätzen von Schienenfahrzeugen. Als Radsatzbearbeitungsmaschinen kommen neben Radsatzdrehmaschinen beispielsweise auch Radsatzfräsmaschinen und Radsatzdrehfräsmaschinen in Frage, da auch dort eine Anpassung an unterschiedliche Spurweiten vorteilhaft sein kann. Nachfolgend wird die Erfindung beispielhaft anhand einer Unterflur-Radsatzdrehmaschine erläutert. Das Reprofilieren von Rädern und Bremsscheiben ist in regelmäßigen Abständen notwendig, da die zu bearbeitenden Flächen - beispielsweise die Laufflächen der Radscheiben - nach einiger Zeit verschleißbedingt ihre Form verändern. Die Unterflur-Radsatzdrehmaschine umfasst zunächst einen Maschinenständer, der dazu dienen kann, die Unterflur-Radsatzdrehmaschine auf einem Untergrund, beispielsweise einer Grube unterhalb eines Werkstattgleises anzuordnen. Die Maschine umfasst zudem einen Querbalken zur Überbrückung eines Werkstattgleises mit wenigstens zwei Schienen in Querrichtung. Unter der Querrichtung wird eine Richtung verstanden, die rechtwinklig zu der Richtung des Gleises und seinen Schienen verläuft und somit parallel zur Achsrichtung des zu bearbeitenden Radsatzes verläuft. Eine "Überbrückung" bedeutet lediglich eine Erstreckung über die Breite des Gleises hinaus; der Querbalken verläuft in den meisten Fällen unterhalb des Gleises. Der Maschinenständer weist einen ersten Teil und einen zweiten Teil auf; er ist also zweiteilig bzw. mehrteilig ausgebildet. Der Querbalken ist an beiden Teilen des Maschinenständers gelagert, beispielsweise sind in beiden Teilen des Maschinenständers Ausnehmungen für den Querbalken vorgesehen. Die beiden Teile des Maschinenständers sind dazu bestimmt, auf gegenüberliegenden Seiten der Maschine angeordnet zu sein, der erste Teil des Maschinenständers soll also beispielsweise der linken Schiene zugeordnet sein und der zweite Teil des Maschinenständers soll der rechten Schiene zugeordnet sein. Die Maschine umfasst weiterhin zwei Rollenträger und wenigstens vier Reibrollen. Die Rollenträger dienen der Lagerung der Reibrollen, die wiederum dazu dienen, die Radscheiben des zu bearbeitenden Radsatzes abzustützen. Die Rollenträger sind beweglich (beispielsweise höhenverstellbar) mit dem Querbalken verbunden und die Reibrollen sind drehbar an dem Rollenträger gelagert. Die Maschine umfasst zudem wenigstens einen Reibrollenantrieb zum Antreiben der Reibrollen sowie wenigstens eine Axialführungsrolle zur axialen Führung des Radsatzes.

Erfindungsgemäß ist vorgesehen, dass der erste Teil des Maschinenständers und der zweite Teil des Maschinenständers relativ zueinander in Querrichtung verschiebbar sind.

Durch die zweiteilige Ausgestaltung des Maschinenständers und die Verschiebbarkeit der beiden Teile des Maschinenständers relativ zueinander kann die Unterflur-Radsatzdrehmaschine an Radsätze mit unterschiedlichen Spurweiten angepasst werden. Dies ist darin begründet, dass die Reibrollen, die die Radscheiben des Radsatzes abstützen, an zwei Rollenträgern gelagert sind, die mit jeweils einem der beiden Teile des Maschinenständers verbunden sind. Eine Veränderung des Abstands zwischen den beiden Teilen des Maschinenständers hat demnach zur Folge, dass sich auch der Abstand der damit verbundenen Rollenträger und der daran gelagerten Reibrollen verändert. Da beide Teile des Maschinenständers durch den Querbalken miteinander verbunden sind, kann die relative Verschiebbarkeit der beiden Teile des Maschinenständers beispielsweise durch eine Längenänderung des Querbalkens erreicht werden (z.B. teleskopartig ineinander schiebbar) oder dadurch erreicht werden, dass der Querbalken an wenigstens einem der beiden Teile des Maschinenständers beweglich bzw. verschiebbar gelagert ist. Diese Lösung hat insbesondere den Vorteil, dass der Rollenträger bei einer Änderung der Spurweite relativ zu dem Maschinenständer in Querrichtung nicht verschoben werden muss. Dies hat beispielsweise konstruktive Vorteile, da die Rollenträger meist bereits in vertikaler Richtung verschiebbar sein müssen, um an Radscheiben mit unterschiedlichen Durchmessern angepasst werden zu können.

Vorteilhafte Ausgestaltungen der Unterflur-Radsatzbearbeitungsmaschine, insbesondere Unterflur-Radsatzdrehmaschine sind in den abhängigen Patentansprüchen beschrieben:
Nach einer ersten Ausgestaltung der Unterflur-Radsatzbearbeitungsmaschine, insbesondere Unterflur-Radsatzdrehmaschine ist vorgesehen, dass wenigstens ein Teil des Maschinenständers relativ zu dem Querbalken in Querrichtung verschiebbar ist. Durch die verschiebbare Lagerung von wenigstens einem Teil des Maschinenständers relativ zu dem Querbalken kann die Unterflur-Radsatzdrehmaschine an Radsätze mit unterschiedlicher Spurweite angepasst werden. Ein Vorteil dieser Lösung liegt darin, dass der andere Teil des Maschinenständers starr bzw. fest mit dem Querbalken verbunden sein kann und dass auch der Querbalken selbst nicht in seiner Länge veränderbar sein muss. Vorzugsweise kann der bewegliche Teil des Maschinenständers in der gewünschten Stellung mit dem Querbalken verklemmt werden. Dies erlaubt trotz der Beweglichkeit des beweglichen Teils des Maschinenständers die Erzeugung einer steifen Verbindung zwischen dem beweglichen Teil des Maschinenständers und dem Querbalken. Durch eine Verklemmung wird zudem erreicht, dass die eingestellte Spurweite während der Bearbeitung der Radsätze präzise eingehalten wird.

Eine weitere Ausgestaltung der Unterflur-Radsatzbearbeitungsmaschine, insbesondere Unterflur-Radsatzdrehmaschine sieht vor, dass beide Teile des Maschinenständers relativ zu dem Querbalken in Querrichtung verschiebbar sind. Indem nicht nur ein Teil des Maschinenständers, sondern beide Teile des Maschinenständers relativ zu dem Querbalken verschiebbar sind, können größere Spurweitendifferenzen überbrückt werden, so dass Radsätze mit unterschiedlichsten Spurweiten bearbeitet werden können. Vorzugsweise können beide beweglichen Teile des Maschinenständers in den gewünschten Stellungen mit dem Querbalken verklemmt werden. Dies erlaubt trotz der Beweglichkeit der beweglichen Teile des Maschinenständers die Erzeugung einer steifen Verbindung zwischen den beweglichen Teilen des Maschinenständers und dem Querbalken. Durch eine Verklemmung wird zudem erreicht, dass die eingestellte Spurweite während der Bearbeitung der Radsätze präzise eingehalten wird.

Nach einer weiteren Ausbildung der Unterflur-Radsatzbearbeitungsmaschine, insbesondere Unterflur-Radsatzdrehmaschine ist vorgesehen, dass wenigstens einer der beiden Teile des Maschinenständers eine Führung zur verschiebbaren Lagerung des Querbalkens aufweist. Eine Führung ist eine konstruktiv einfache und besonders präzise Lösung für die Aufgabe, die Position des Querbalkens relativ zu dem Maschinenständer (bzw. zu einem seiner Teile) zu verändern. Bei der Führung kann es sich insbesondere um eine Linearführung handeln, die sicherstellt, dass ausschließlich der Abstand in Querrichtung linear verändert wird, während andere unerwünschte Bewegungen (z.B. Kipp- oder Schwenkbewegungen) verhindert werden. Vorzugsweise weist die Führung eine Klemmeinrichtung zum Festklemmen des Querbalkens auf. Dies erlaubt trotz der verschiebbaren Lagerung des Querbalkens die Erzeugung einer steifen Verbindung zwischen der Führung und dem Querbalken. Durch die Klemmeinrichtung wird zudem erreicht, dass die eingestellte Spurweite während der Bearbeitung der Radsätze präzise eingehalten wird.

Gemäß einer weiteren Ausgestaltung der Unterflur-Radsatzbearbeitungsmaschine, insbesondere Unterflur-Radsatzdrehmaschine ist vorgesehen, dass beide Teile des Maschinenständers jeweils eine Führung zur verschiebbaren Lagerung des Querbalkens aufweisen. Indem beide Teile des Maschinenständers eine eigene Führung zur Lagerung des Querbalkens aufweisen, können größere Spurweitendifferenzen überbrückt werden, so dass Radsätze mit unterschiedlichsten Spurweiten bearbeitet werden können. Vorzugsweise weisen beide Führungen eine Klemmeinrichtung zum Festklemmen des Querbalkens auf. Dies erlaubt trotz der verschiebbaren Lagerung des Querbalkens die Erzeugung einer steifen Verbindung zwischen den Führungen und dem Querbalken. Durch die Klemmeinrichtungen wird zudem erreicht, dass die eingestellte Spurweite während der Bearbeitung der Radsätze präzise eingehalten wird.

Nach einer weiteren Ausbildung der Unterflur-Radsatzbearbeitungsmaschine, insbesondere Unterflur-Radsatzdrehmaschine ist vorgesehen, dass wenigstens einer der beiden Teile des Maschinenständers eine Lagerung zur Verschiebung in Querrichtung aufweist. Die Lagerung dient dem Zweck, wenigstens einen Teil des Maschinenständers relativ zu dem Untergrund, auf dem der Maschinenständer steht, in Querrichtung verschieben zu können. Vorzugsweise ist die Lagerung an der Unterseite des Maschinenständers (bzw. des beweglichen Teils des Maschineständers) angeordnet. Die Lagerung kann einteilig oder mehrteilig ausgeführt sein. Eine einteilige Lagerung kann beispielsweise durch eine Rolle, die an der Unterseite des beweglichen Teils des Maschinenständers befestigt ist, gebildet werden. Eine mehrteilige Lagerung kann beispielsweise durch zwei Bauteile gebildet werden, wobei das erste Bauteil (z.B. eine Schiene) auf dem Untergrund bzw. Boden angeordnet ist und wobei das zweite Bauteil (z.B. ein Führungselement) an der Unterseite des beweglichen Teils des Maschinenständers befestigt ist. Vorzugsweise weist die Lagerung eine Klemmeinrichtung zum Festklemmen des beweglichen Teils des Maschinenständers in der gewünschten Stellung auf. Durch die Klemmeinrichtung wird erreicht, dass die eingestellte Spurweite während der Bearbeitung der Radsätze präzise eingehalten wird.

Gemäß einer weiteren Ausgestaltung der Unterflur-Radsatzbearbeitungsmaschine, insbesondere Unterflur-Radsatzdrehmaschine ist vorgesehen, dass beide Teile des Maschinenständers jeweils eine Lagerung zur Verschiebung in Querrichtung aufweisen. Indem beide Teile des Maschinenständers eine eigene Lagerung zur Verschiebung von dem entsprechenden Teil des Maschinenständers in Querrichtung aufweisen, können größere Spurweitendifferenzen überbrückt werden, so dass Radsätze mit unterschiedlichsten Spurweiten bearbeitet werden können. Vorzugsweise weisen beide Lagerungen eine Klemmeinrichtung zum Festklemmen der beweglichen Teile des Maschinenständers in der gewünschten Stellung auf. Durch die Klemmeinrichtung wird erreicht, dass die eingestellte Spurweite während der Bearbeitung der Radsätze präzise eingehalten wird.

Nach einer weiteren Ausbildung der Unterflur-Radsatzbearbeitungsmaschine, insbesondere Unterflur-Radsatzdrehmaschine ist vorgesehen, dass ein Rollenträger dem ersten Teil Maschinenständers zugeordnet ist und dass der andere Rollenträger dem zweiten Teil Maschinenständers zugeordnet ist. Insbesondere kann vorgesehen sein, dass ein Rollenträger an dem ersten Teil des Maschinenständers befestigt ist und dass der andere Rollenträger an dem zweiten Teil des Maschinenständers befestigt ist. Vorzugsweise handelt es sich um eine in Querrichtung unbewegliche Befestigung. Auf diese Weise wird sichergestellt, dass eine Veränderung der Position der Teile des Maschinenständers in Querrichtung zu einer entsprechenden Veränderung der Position der Rollenträger in Querrichtung führt. Die Rollenträger brauchen daher relativ zu dem Maschinenständer nicht beweglich sein, sondern können - jedenfalls in Querrichtung - unbeweglich gelagert sein.

Eine weitere Ausgestaltung der Unterflur-Radsatzbearbeitungsmaschine, insbesondere Unterflur-Radsatzdrehmaschine sieht vor, dass an dem ersten Rollenträger wenigstens zwei Reibrollen drehbar gelagert sind und dass an dem zweiten Rollenträger wenigstens zwei Reibrollen drehbar gelagert sind. Durch die drehbare Lagerung der Reibrollen kann der auf den Reibrollen abgestützte Radsatz gedreht werden und seine Radscheiben und/oder seine Bremsscheibe somit entlang des gesamten Umfangs bearbeitet werden. Indem an jedem Rollenträger zwei Reibrollen vorgesehen sind, können Radscheiben mit unterschiedlichen Durchmessern durch dieselben Reibrollen abgestützt werden.

Gemäß einer weiteren Ausgestaltung der Unterflur-Radsatzbearbeitungsmaschine, insbesondere Unterflur-Radsatzdrehmaschine ist vorgesehen, dass die Unterflur-Radsatzbearbeitungsmaschine, insbesondere Unterflur-Radsatzdrehmaschine wenigstens einen Antrieb zur Verstellung des Abstands zwischen beiden Teilen des Maschinenständers aufweist. Ein Antrieb hat im Gegensatz zu einer manuellen Verstellung den Vorteil einer schnellen und sicheren Verstellbarkeit durch den Bediener. Zu dieser Ausgestaltung wird weiter vorgeschlagen, dass der Antrieb einen Hydraulikzylinder aufweist. Hydraulische Antriebe haben den Vorteil, auf einfache Weise große Kräfte erzeugen zu können, eine hohe Stellgenauigkeit aufzuweisen und eine hohe Lebensdauer zu haben.

Nach einer weiteren Ausgestaltung der Unterflur-Radsatzbearbeitungsmaschine, insbesondere Unterflur-Radsatzdrehmaschine ist schließlich vorgesehen, dass durch die Verschiebung eines und/oder beider Teile des Maschinenständers ein Verstellbereich von bis zu 700 mm erreichbar ist, insbesondere ein Verstellbereich im Bereich zwischen 50 mm und 700 mm erreichbar ist. Durch diesen Verstellbereich können viele international übliche Spurweiten abgedeckt werden.

Die Erfindung wird nachfolgend anhand einer lediglich ein bevorzugtes Ausführungsbeispiel darstellenden Zeichnung näher erläutert. In der Zeichnung zeigen:
- Fig. 1:: eine aus dem Stand der Technik bekannte Unterflur-Radsatzdrehmaschine in einer Draufsicht,
- Fig. 2:: die Unterflur-Radsatzdrehmaschine aus Fig. 1 in einer geschnittenen Ansicht entlang der in Fig. 1 eingezeichneten Schnittebene II-II,
- Fig. 3A:: eine erfindungsgemäße Unterflur-Radsatzdrehmaschine in einer ersten Stellung in Vorderansicht,
- Fig. 3B:: die Unterflur-Radsatzdrehmaschine aus Fig. 3A in einer zweiten Stellung in Vorderansicht,
- Fig. 4A:: die Unterflur-Radsatzdrehmaschine aus Fig. 3A in Draufsicht,
- Fig. 4B:: die Unterflur-Radsatzdrehmaschine aus Fig. 3B in Draufsicht, und
- Fig. 5:: die Unterflur-Radsatzdrehmaschine aus Fig. 3A in einer Seitenansicht aus der in Fig. 3A eingezeichneten Blickrichtung V.

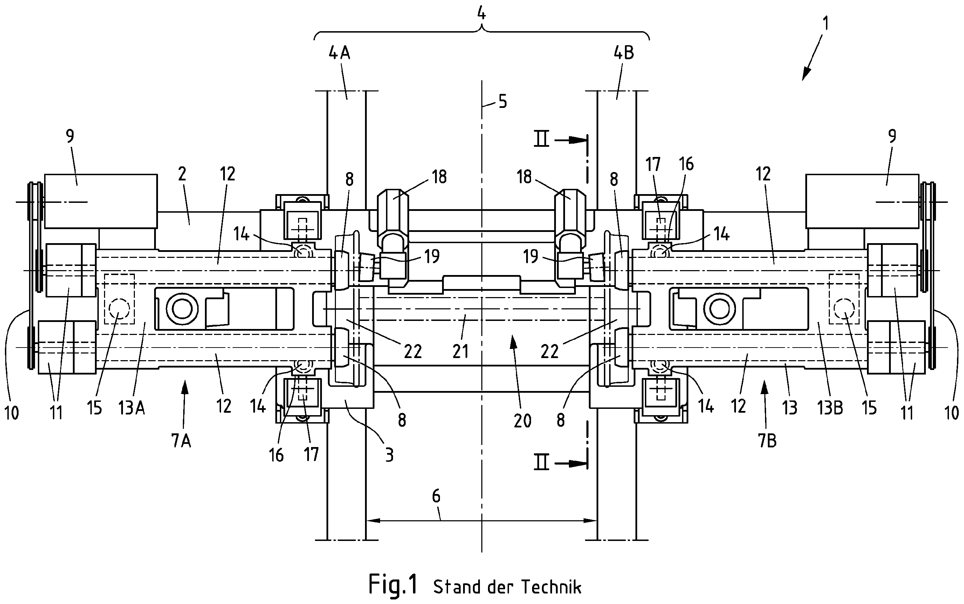

Fig. 1 zeigt eine aus dem Stand der Technik bekannte Unterflur-Radsatzdrehmaschine 1 in einer Draufsicht. Die gezeigte Unterflur-Radsatzdrehmaschine 1 weist einen Querbalken 2 auf, der auf einem einteiligen (in Fig. 1 weitgehend verdeckten) Maschinenständer 3 gelagert ist. Der Maschinenständer 3 kann auf einen Werkstattboden gestellt werden und ist somit ortsfest und nicht verschiebbar. Weiterhin dargestellt ist ein Gleis 4 aus zwei Schienen 4A, 4B, die parallel zueinander verlaufen und eine Mittelachse 5 einschließen. Der Abstand zwischen den Innenkanten der beiden Schienen 4A, 4B wird als Spurweite 6 bezeichnet. Der Querbalken 2 verläuft etwa in einem rechten Winkel zu den beiden Schienen 4A, 4B und zu deren Mittelachse 5. Die Unterflur-Radsatzdrehmaschine 1 weist zwei Rollenträger 7A, 7B auf, die an gegenüberliegenden Enden des Maschinenständers 3 angeordnet sind. An jedem der beiden Rollenträger 7A, 7B sind zwei Reibrollen 8 drehbar gelagert. Die Reibrollen 8 werden über einen Reibrollenantrieb 9 angetrieben, der seine Antriebsleistung über einen Riementrieb 10, zwei Getriebe 11 und zwei Wellen 12 auf die beiden Reibrollen 8 überträgt. Die Rollenträger 7A, 7B weisen jeweils ein Gehäuse 13A, 13B auf, in denen die Wellen 12 drehbar gelagert sind.

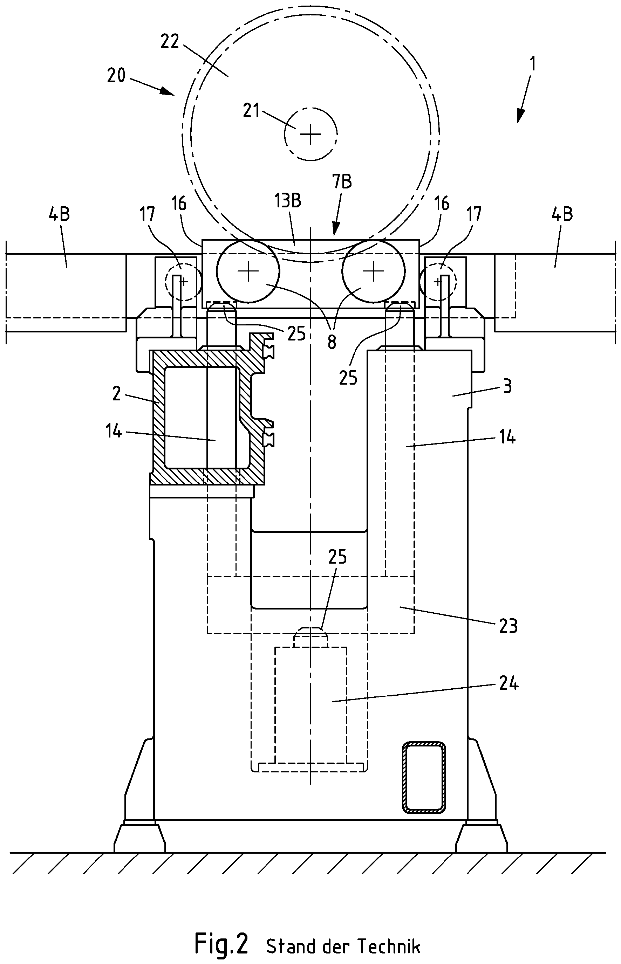

Die beiden Rollenträger 7A, 7B sind in vertikaler Richtung an drei Stellen abgestützt, nämlich jeweils auf zwei vertikalen Stangen 14 (innen) sowie auf einer Halterung 15 (außen). Die beiden Rollenträger 7A, 7B weisen zudem jeweils zwei Führungsflächen 16 auf, die an Rollen 17 abrollen können, welche an dem Querträger 2 oder an dem Maschinenständer 3 vorgesehen sind. Die Lagerung der Rollenträger 7A, 7B wird im Zusammenhang mit Fig. 2 näher erläutert. Die in Fig. 1 gezeigte Unterflur-Radsatzdrehmaschine 1 weist zudem zwei Halter 18 auf, an denen jeweils eine Axialführungsrolle 19 drehbar gelagert ist. Auf der in Fig. 1 gezeigten Unterflur-Radsatzdrehmaschine 1 kann ein Radsatz 20 bearbeitet werden, der im beispielhaft dargestellten Fall eine Radsatzwelle 21 und zwei Radscheiben 22 umfasst. Der Radsatz 20 kann zudem Bremsscheiben umfassen, die aus Gründen der besseren Übersichtlichkeit in Fig. 1 nicht dargestellt sind.

In Fig. 2 ist die Unterflur-Radsatzdrehmaschine 1 aus Fig. 1 in einer geschnittenen Ansicht entlang der in Fig. 1 eingezeichneten Schnittebene II-II dargestellt. Diejenigen Bereiche der Unterflur-Radsatzdrehmaschine 1, die bereits im Zusammenhang mit Fig. 1 beschrieben wurden, sind in Fig. 2 - und in allen weiteren Figuren - mit entsprechenden Bezugszeichen versehen. In der geschnittenen Ansicht ist der etwa rechteckige Querschnitt des Querbalkens 2 gut erkennbar. Zudem wird in der in Fig. 2 gewählten Ansicht deutlich, dass die Radscheiben 22 des Radsatzes 20 durch die beiden Reibrollen 8 gestützt werden und durch die Drehung der Reibrollen 8 auch eine Drehung der Radscheiben 22 erfolgt. Deutlich erkennbar ist auch die Lagerung des Gehäuses 13B des Rollenträgers 7B auf den beiden vertikalen Stangen 14. Die beiden vertikalen Stangen 14 sind in ihrem unteren Bereich durch eine Gabel 23 miteinander verbunden. Die Gabel 23 kann durch einen mit dem Maschinenständer 3 verbundenen Hubzylinder 24 in vertikaler Richtung verschoben werden, also angehoben und abgesenkt werden. Durch diese Vertikalbewegung werden auch der Rollenträger 7B und die daran gelagerten Reibrollen 8 in vertikaler Richtung verschoben, was eine Anpassung der Unterflur-Radsatzdrehmaschine 1 an Radscheiben 22 mit unterschiedlichen Durchmessern erlaubt. Die Verbindung zwischen dem Gehäuse 13B des Rollenträgers 7B und den vertikalen Stangen 14 erfolgt ebenso wie die Verbindung zwischen Gabel 23 und Hubzylinder 24 über geeignete Gelenke 25. Erkennbar ist zudem das Prinzip der Positionierung des Rollenträgers 7B in Richtung der Schiene 4B: Der Rollenträger 7B weist zwei Führungsflächen 16 auf, die an Rollen 17 abrollen können, die an dem Querträger 2 oder dem Maschinenständer 3 vorgesehen sind. Um den Radsatz 20 auf die Reibrollen 8 zu setzen, ist die Schiene 4B (ebenso wie die nicht dargestellte Schiene 4A) im Bereich der Reibrollen 8 unterbrochen und kann dort teleskopartig ein- und ausgefahren werden.

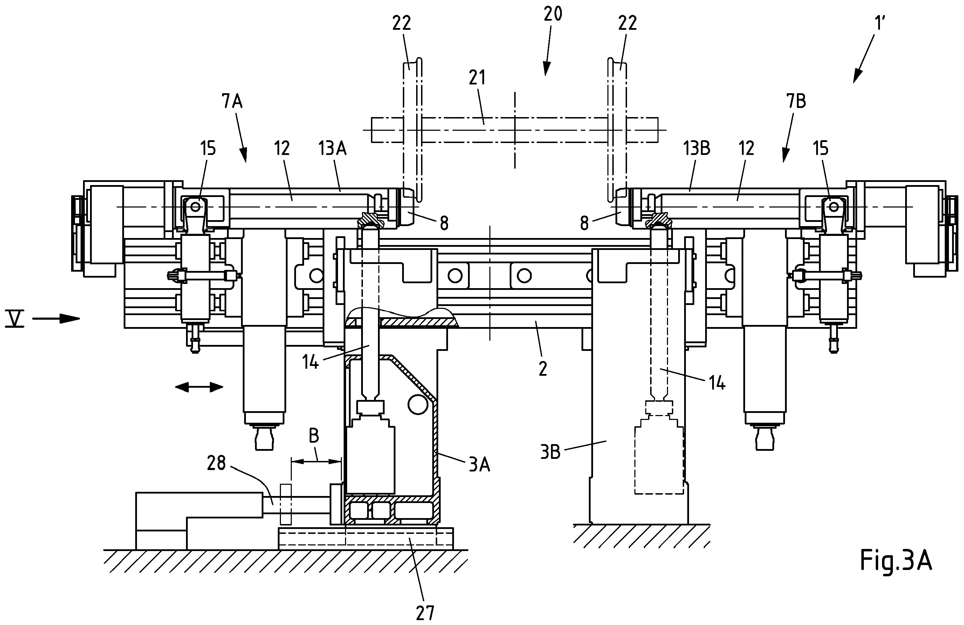

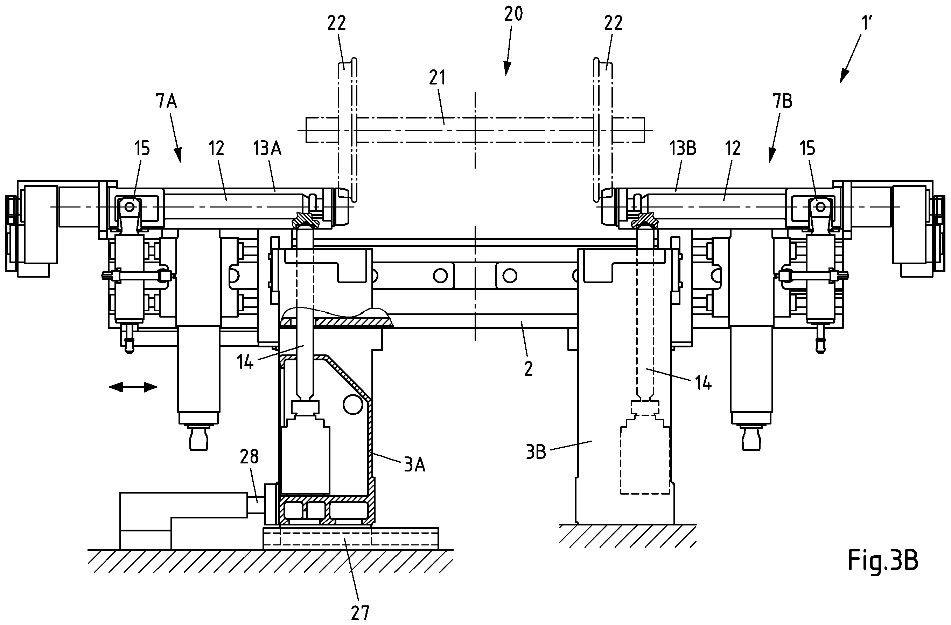

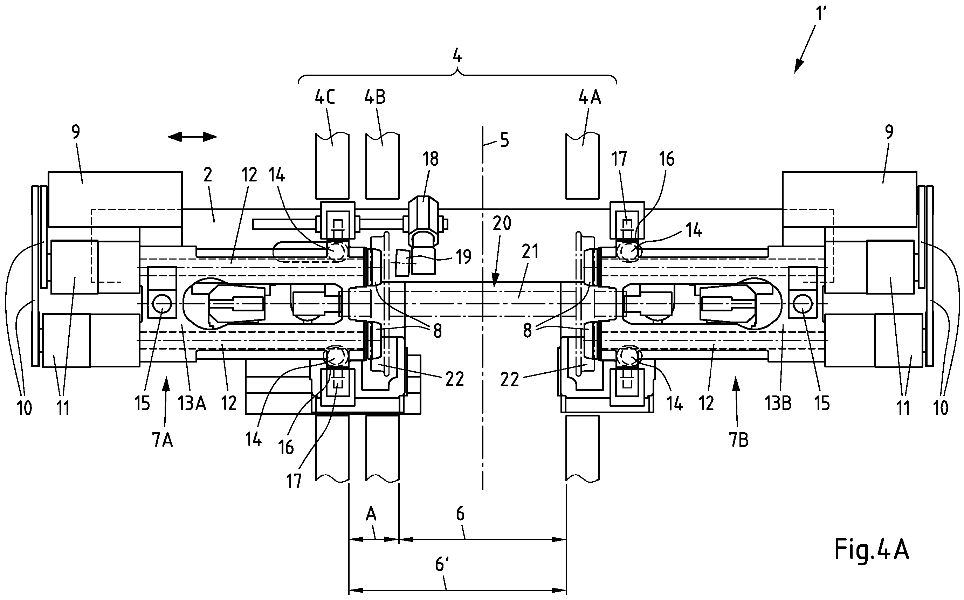

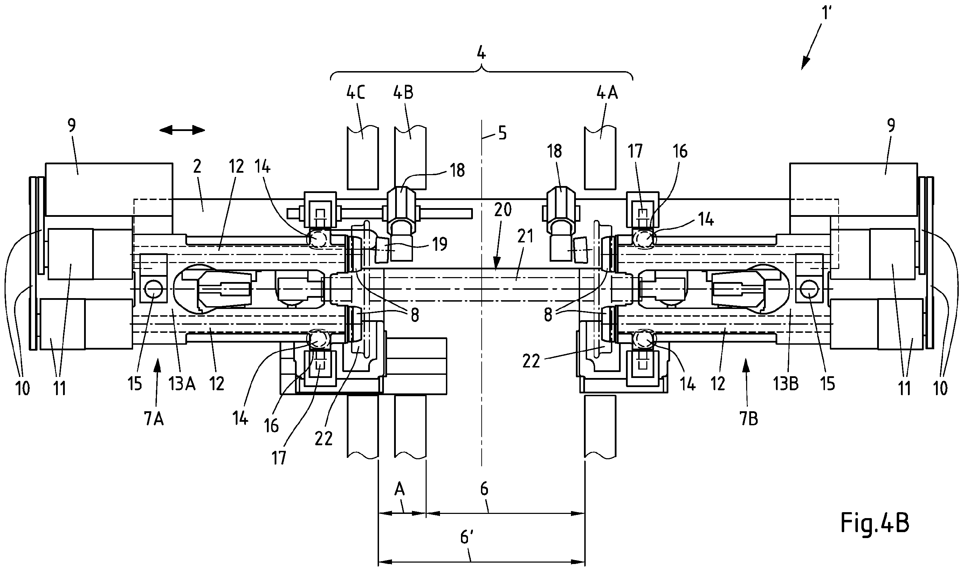

Fig. 3A zeigt eine erfindungsgemäße Unterflur-Radsatzdrehmaschine 1' in einer ersten Stellung in Vorderansicht. In Fig. 3B ist die Unterflur-Radsatzdrehmaschine 1' aus Fig. 3A in einer zweiten Stellung in Vorderansicht gezeigt. Fig. 4A zeigt die Unterflur-Radsatzdrehmaschine 1' aus Fig. 3A in Draufsicht. In Fig. 4B ist die Unterflur-Radsatzdrehmaschine 1' aus Fig. 3B in Draufsicht dargestellt. Diejenigen Bereiche der Unterflur-Radsatzdrehmaschine 1', die bereits im Zusammenhang mit der Unterflur-Radsatzdrehmaschine 1 aus Fig. 1 und Fig. 2 beschrieben wurden, sind in Fig. 3A bis Fig. 4B mit entsprechenden Bezugszeichen versehen. Die in Fig. 3A bis Fig. 4B gezeigte Unterflur-Radsatzdrehmaschine 1' unterscheidet sich insbesondere dadurch von der zuvor beschriebenen Unterflur-Radsatzdrehmaschine 1, dass wenigstens ein Teil 3A des Maschinenständers 3 relativ zu dem Querbalken 2 in Querrichtung verschiebbar ist. Die Richtung der Verschiebbarkeit ist schematisch durch einen Doppelpfeil dargestellt. Vorzugsweise ist auch der andere Teil 3B des Maschinenständers 3 relativ zu dem Querbalken 2 in Querrichtung verschiebbar (in den Figuren nicht dargestellt).

Bei der in Fig. 3A und in Fig. 4A gezeigten Stellung ist der erste Teil 3A des Maschinenständers 3 (und der darauf montierte Rollenträger 7A) nach innen (also in Richtung des zweiten Teils 3B des Maschinenständers 3) verschoben, so dass Radsätze 20 mit geringerer Spurweite 6 bearbeitet werden können (entspricht der Schiene 4B). Bei der in Fig. 3B und in Fig. 4B gezeigten Stellung ist der erste Teil 3A des Maschinenständers 3 (und der darauf montierte Rollenträger 7A) hingegen nach außen verschoben, so dass Radsätze 20 mit größerer Spurweite 6' bearbeitet werden können (entspricht der Schiene 4C). Zwischen beiden Spurweiten 6, 6' besteht eine Spurweitendifferenz A.

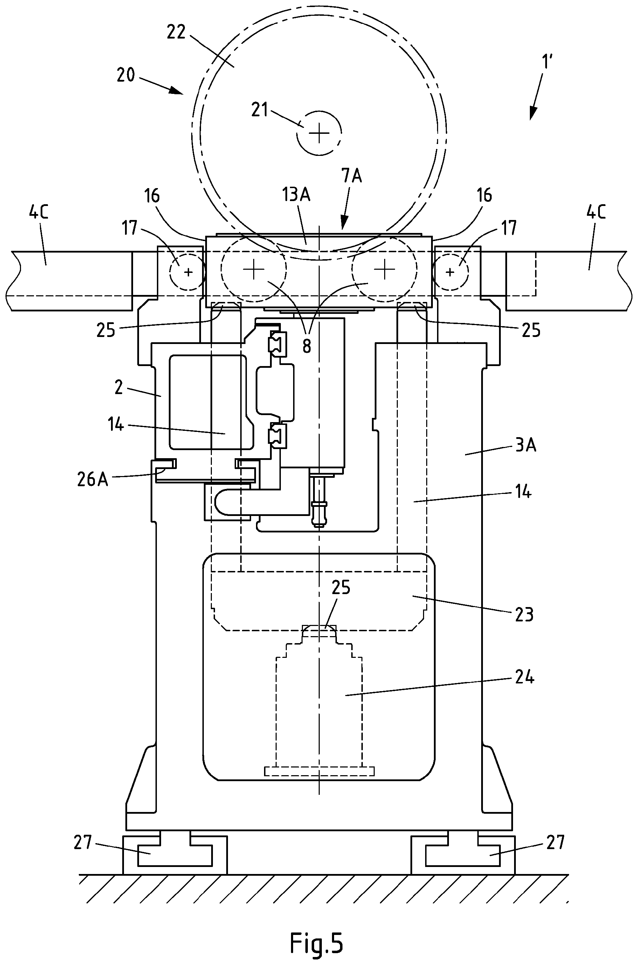

Die Verschiebbarkeit des ersten Teils 3A des Maschinenständers 3 wird erreicht, indem der erste Teil 3A des Maschinenständers 3 eine Führung 26A zur verschiebbaren Lagerung des Querbalkens 2 aufweist. Die Führung des Querbalkens 2 wird im Zusammenhang mit Fig. 5 näher beschrieben. Die Verschiebbarkeit des ersten Teils 3A des Maschinenständers 3 wird zudem dadurch erreicht, dass der erste Teil 3A eine Lagerung 27 aufweist, die eine Verschiebung des ersten Teils 3A des Maschinenständers 3 relativ zu dem Untergrund bzw. Boden in Querrichtung erlaubt. Zur Verschiebung des ersten Teils 3A des Maschinenständers 3 in Querrichtung kann ein Antrieb 28 vorgesehen sein, der beispielsweise einen Hydraulikzylinder aufweisen kann. Der erste Teil 3A des Maschinenständers 3 weist einen Verstellbereich B auf, der wenigstens so groß ist wie die Spurweitendifferenz A.

In Fig. 5 ist die Unterflur-Radsatzdrehmaschine 1' aus Fig. 3A in einer Seitenansicht aus der in Fig. 3A eingezeichneten Blickrichtung V dargestellt. Diejenigen Bereiche der Unterflur-Radsatzdrehmaschine 1', die bereits im Zusammenhang mit der Unterflur-Radsatzdrehmaschine 1 aus Fig. 1 und Fig. 2 oder im Zusammenhang mit der Unterflur-Radsatzdrehmaschine 1' aus Fig. 3A bis Fig. 4B beschrieben wurden, sind in Fig. 5 mit entsprechenden Bezugszeichen versehen. In der in Fig. 5 dargestellten Ansicht ist die verschiebbare Lagerung des ersten Teils 3A des Maschinenständers 3 relativ zu dem Querbalken 2 besonders gut erkennbar: einerseits weist der erste Teil 3A des Maschinenständers 3 eine Führung 26A auf, in der der Querbalken 2 in Querrichtung beweglich geführt ist. Die Führung 26A kann insbesondere als Linearführung ausgestaltet sein, so dass der erste Teil 3A des Maschinenständers 3 ausschließlich linear (in Querrichtung) verschoben werden kann. Zudem weist der erste Teil 3A des Maschinenständers 3 an seiner Unterseite zwei Lagerungen 27 auf, durch die der erste Teil 3A des Maschinenständers 3 relativ zu dem Untergrund bzw. Boden bewegt werden kann. Die Lagerung 27 kann ebenfalls insbesondere derart gestaltet sein, dass der erste Teil 3A des Maschinenständers 3 ausschließlich linear (in Querrichtung) verschoben werden kann.

Bei dem zuvor beschriebenen Ausführungsbeispiel der Unterflur-Radsatzdrehmaschine 1' ist nur der erste Teil 3A des Maschinenständers 3 relativ zu dem Querbalken 2 (und relativ zu dem Untergrund) verschiebbar. Alternativ oder zusätzlich kann vorgesehen sein, dass der zweite Teil 3B des Maschinenständers 3 relativ zu dem Querbalken 2 (und relativ zu dem Untergrund) verschiebbar ist. Hierzu können die gleichen Mittel (Führung 26, Lagerung 27, Antrieb 28) oder andere geeignete Mittel vorgesehen sein.

### Bezugszeichenliste:

- 1, 1':: Unterflur-Radsatzdrehmaschine
- 2:: Querbalken
- 3:: Maschinenständer
- 3A, 3B:: Erster Teil bzw. zweiter Teil (des Maschinenständers 3)
- 4:: Gleis
- 4A, 4B, 4C:: Schiene
- 5:: Mittelachse
- 6,6':: Spurweite
- 7A, 7B:: Rollenträger
- 8:: Reibrolle
- 9:: Reibrollenantrieb
- 10:: Riementrieb
- 11:: Getriebe
- 12:: Welle
- 13A, 13B:: Gehäuse (des Rollenträgers 7A, 7B)
- 14:: vertikale Stange
- 15:: Halterung
- 16:: Führungsfläche
- 17:: Rolle
- 18:: Halter
- 19:: Axialführungsrolle
- 20:: Radsatz
- 21:: Radsatzwelle
- 22:: Radscheibe
- 23:: Gabel
- 24:: Hubzylinder
- 25:: Gelenk
- 26A, 26B:: Führung
- 27:: Lagerung
- 28:: Antrieb

- A:: Spurweitendifferenz
- B:: Verstellbereich

## Patentansprüche

1. Unterflur-Radsatzbearbeitungsmaschine, insbesondere Unterflur-Radsatzdrehmaschine (1') zum Reprofilieren von Rädern und Bremsscheiben von Radsätzen (20) von Schienenfahrzeugen, umfassend:
- einen Maschinenständer (3),
- einen Querbalken (2) zur Überbrückung eines Werkstattgleises (4) mit wenigstens zwei Schienen (4A, 4B, 4C) in Querrichtung,
- zwei Rollenträger (7A, 7B),
- wenigstens vier Reibrollen (8),
- wenigstens einen Reibrollenantrieb (9) zum Antreiben der Reibrollen (8), und
- wenigstens eine Axialführungsrolle (19) zur axialen Führung des Radsatzes (20),
- wobei der Maschinenständer (3) einen ersten Teil (3A) und einen zweiten Teil (3B) aufweist,
- wobei der Querbalken (2) an beiden Teilen (3A, 3B) des Maschinenständers (3) gelagert ist,
- wobei die Rollenträger (7A, 7B) beweglich mit dem Maschinenständer (3) verbunden sind,
- wobei die Reibrollen (8) drehbar an dem Rollenträger (7A, 7B) gelagert sind, und
- wobei der erste Teil (3A) des Maschinenständers (3) und der zweite Teil (3B) des Maschinenständers (3) relativ zueinander in Querrichtung verschiebbar sind,
**dadurch gekennzeichnet, dass**
wenigstens einer der beiden Teile (3A, 3B) des Maschinenständers (3) eine Führung (26A, 26B) zur verschiebbaren Lagerung des Querbalkens (2) mit einer Klemmeinrichtung zum Festklemmen des Querbalkens (2) aufweist.

2. Unterflur-Radsatzbearbeitungsmaschine, insbesondere Unterflur-Radsatzdrehmaschine, nach Anspruch 1,
**dadurch gekennzeichnet, dass**
wenigstens ein Teil (3A, 3B) des Maschinenständers (3) relativ zu dem Querbalken (2) in Querrichtung verschiebbar ist.

3. Unterflur-Radsatzbearbeitungsmaschine, insbesondere Unterflur-Radsatzdrehmaschine, nach Anspruch 1 oder Anspruch 2,
**dadurch gekennzeichnet, dass**
beide Teile (3A, 3B) des Maschinenständers (3) relativ zu dem Querbalken (2) in Querrichtung verschiebbar sind.

4. Unterflur-Radsatzbearbeitungsmaschine, insbesondere Unterflur-Radsatzdrehmaschine, nach einem der Ansprüche 1 bis 3,
**dadurch gekennzeichnet, dass**
beide Teile (3A, 3B) des Maschinenständers (3) jeweils eine Führung (26A, 26B) zur verschiebbaren Lagerung des Querbalkens (2) aufweisen.

5. Unterflur-Radsatzbearbeitungsmaschine, insbesondere Unterflur-Radsatzdrehmaschine, nach einem der Ansprüche 1 bis 4,
**dadurch gekennzeichnet, dass**
wenigstens einer der beiden Teile (3A, 3B) des Maschinenständers (3) eine Lagerung (27) zur Verschiebung in Querrichtung aufweist.

6. Unterflur-Radsatzbearbeitungsmaschine, insbesondere Unterflur-Radsatzdrehmaschine, nach einem der Ansprüche 1 bis 5,
**dadurch gekennzeichnet, dass**
beide Teile (3A, 3B) des Maschinenständers (3) jeweils eine Lagerung (27) zur Verschiebung in Querrichtung aufweisen.

7. Unterflur-Radsatzbearbeitungsmaschine, insbesondere Unterflur-Radsatzdrehmaschine, nach einem der Ansprüche 1 bis 6,
**dadurch gekennzeichnet, dass**
ein Rollenträger (7A) dem ersten Teil (3A) Maschinenständers (3) zugeordnet ist und dass der andere Rollenträger (7B) dem zweiten Teil (3B) Maschinenständers (3) zugeordnet ist.

8. Unterflur-Radsatzbearbeitungsmaschine, insbesondere Unterflur-Radsatzdrehmaschine, nach einem der Ansprüche 1 bis 7,
**dadurch gekennzeichnet, dass**
an dem ersten Rollenträger (7A) wenigstens zwei Reibrollen (8) drehbar gelagert sind und dass an dem zweiten Rollenträger (7B) wenigstens zwei Reibrollen (8) drehbar gelagert sind.

9. Unterflur-Radsatzbearbeitungsmaschine, insbesondere Unterflur-Radsatzdrehmaschine, nach einem der Ansprüche 1 bis 8,
**dadurch gekennzeichnet, dass**
die Unterflur-Radsatzdrehmaschine (1') wenigstens einen Antrieb (28) zur Verstellung des Abstands zwischen beiden Teilen (3A, 3B) des Maschinenständers (3) aufweist.

10. Unterflur-Radsatzbearbeitungsmaschine, insbesondere Unterflur-Radsatzdrehmaschine, nach Anspruch 9,
**dadurch gekennzeichnet, dass**
der Antrieb (28) einen Hydraulikzylinder aufweist.

11. Unterflur-Radsatzbearbeitungsmaschine, insbesondere Unterflur-Radsatzdrehmaschine, nach einem der Ansprüche 1 bis 10,
**dadurch gekennzeichnet, dass**
durch die Verschiebung eines und/oder beider Teile (3A, 3B) des Maschinenständers (3) ein Verstellbereich (B) von bis zu 700 mm erreichbar ist, insbesondere ein Verstellbereich (B) im Bereich zwischen 50 mm und 700 mm erreichbar ist.

## Claims

1. Underfloor wheelset reprofiling machine, in particular an underfloor wheelset lathe (1') for reprofiling the wheels and brake discs of wheelsets (20) of rail vehicles, comprising:
- a machine stand (3),
- a crossbeam (2) for bridging a workshop track (4) with at least two rails (4A, 4B, 4C) in the transverse direction,
- two roller carriers (7A, 7B),
- at least four friction rollers (8),
- at least one friction roller drive (9) for driving the friction rollers (8), and
- at least one axial guide roller (19) for the axial guidance of the wheelset (20),
- wherein the machine stand (3) comprises a first part (3A) and a second part (3B),
- wherein the crossbeam (2) is mounted on both parts (3A, 3B) of the machine stand (3),
- wherein the roller carriers (7A, 7B) are movably connected to the machine stand (3),
- wherein the friction rollers (8) are rotatably mounted on the roller carrier (7A, 7B), and
- wherein the first part (3A) of the machine stand (3) and the second part (3B) of the machine stand (3) are displaceable relative to each other in the transverse direction,
**characterised in that**
at least one of the two parts (3A, 3B) of the machine stand (3) has a guide (26A, 26B) for the displaceable support of the crossbeam (2) with a clamping device for clamping the crossbeam (2).

2. Underfloor wheelset reprofiling machine, in particular an underfloor wheelset lathe, according to claim 1,
**characterised in that**
at least one part (3A, 3B) of the machine stand (3) is displaceable in the transverse direction relative to the crossbeam (2).

3. Underfloor wheelset reprofiling machine, in particular an underfloor wheelset lathe, according to claim 1 or claim 2,
**characterised in that**
both parts (3A, 3B) of the machine stand (3) are displaceable in the transverse direction relative to the crossbeam (2).

4. Underfloor wheelset reprofiling machine, in particular an underfloor wheelset lathe, according to one of the claims 1 to 3,
**characterised in that**
both parts (3A, 3B) of the machine stand (3) each has a guide (26A, 26B) for the displaceable support of the crossbeam (2).

5. Underfloor wheelset reprofiling machine, in particular an underfloor wheelset lathe, according to one of the claims 1 to 4,
**characterised in that**
at least one of the two parts (3A, 3B) of the machine stand (3) has a support (27) for displacement in the transverse direction.

6. Underfloor wheelset reprofiling machine, in particular an underfloor wheelset lathe, according to one of the claims 1 to 5,
**characterised in that**
both parts (3A, 3B) of the machine stand (3) each has a support (27) for displacement in the transverse direction.

7. Underfloor wheelset reprofiling machine, in particular an underfloor wheelset lathe, according to one of the claims 1 to 6,
**characterised in that**
one roller carrier (7A) is assigned to the first part (3A) of the machine stand (3) and that the other roller carrier (7B) is assigned to the second part (3B) of the machine stand (3).

8. Underfloor wheelset reprofiling machine, in particular an underfloor wheelset lathe, according to one of the claims 1 to 7,
**characterised in that**
at least two friction rollers (8) are rotatably mounted on the first roller carrier (7A) and that at least two friction rollers (8) are rotatably mounted on the second roller carrier (7B).

9. Underfloor wheelset reprofiling machine, in particular an underfloor wheelset lathe, according to one of the claims 1 to 8,
**characterised in that**
the underfloor wheelset lathe (1') has at least one drive (28) for the adjustment of the distance between the two parts (3A, 3B) of the machine stand (3).

10. Underfloor wheelset reprofiling machine, in particular an underfloor wheelset lathe, according to claim 9,
**characterised in that**
the drive (28) comprises a hydraulic cylinder.

11. Underfloor wheelset reprofiling machine, in particular an underfloor wheelset lathe, according to one of the claims 1 to 10,
**characterised in that**
an adjustment range (B) of up to 700 mm can be achieved by displacing one and/or both parts (3A, 3B) of the machine stand (3), in particular an adjustment range (B) within the range of between 50 mm and 700 mm.

## Revendications

1. Machine d'usinage d'essieux montés en fosse, plus précisément tour à trains de roues en fosse (1') destiné au reprofilage des roues et des disques de freins d'essieux montés (20) de véhicules sur rail, comprenant les éléments suivants :
- un bâti de machine (3),
- une traverse (2) pour le pontage d'une voie de réparations (4) équipée d'au moins deux rails (4A, 4B, 4C) dans le sens transversal,
- deux porte-galets (7A, 7B),
- au moins quatre galets de friction (8),
- au moins un entraînement à galets de friction (9) assurant l'entraînement des galets de friction (8),
- et au moins un galet de guidage axial (19) assurant le guidage axial de l'essieu monté (20),
- dans lequel le bâti de machine (3) présente une première pièce (3A) et une deuxième pièce (3B),
- dans lequel la traverse (2) est montée aux deux pièces (3A, 3B) du bâti de machine (3),
- dans lequel les porte-galets (7A, 7B) sont reliés de manière mobile au bâti de machine (3),
- dans lequel les galets de friction (8) sont montés sur le porte-galets (7A, 7B) avec une possibilité de rotation,
- et dans lequel la première pièce (3A) du bâti de machine (3) et la deuxième pièce (3B) du bâti de machine (3) peuvent être déplacées l'une par rapport à l'autre dans le sens transversal,
ayant pour caractéristique
qu'au moins l'une des deux pièces (3A, 3B) du bâti de machine (3) est équipée d'un centreur (26A, 26B) permettant le montage mobile de la traverse (2), muni d'un dispositif de blocage pour assurer le serrage de la traverse (2).

2. Machine d'usinage d'essieux montés en fosse, plus précisément tour à trains de roues en fosse, conforme à la revendication 1,
ayant pour caractéristique
qu'au moins une pièce (3A, 3B) du bâti de machine (3) peut être déplacée dans le sens transversal par rapport à la traverse (2).

3. Machine d'usinage d'essieux montés en fosse, plus précisément tour à trains de roues en fosse, conforme à la revendication 1 ou à la revendication 2,
ayant pour caractéristique
que les deux pièces (3A, 3B) du bâti de machine (3) peuvent être déplacées dans le sens transversal par rapport à la traverse (2).

4. Machine d'usinage d'essieux montés en fosse, plus précisément tour à trains de roues en fosse, conforme à l'une des revendications 1 à 3,
ayant pour caractéristique
que les deux pièces (3A, 3B) du bâti de machine (3) sont toutes deux équipées d'un centreur (26A, 26B) permettant le montage mobile de la traverse (2).

5. Machine d'usinage d'essieux montés en fosse, plus précisément tour à trains de roues en fosse, conforme à l'une des revendications 1 à 4,
ayant pour caractéristique
qu'au moins l'une des deux pièces (3A, 3B) du bâti de machine (3) est équipée d'un logement de palier (27) permettant son déplacement dans le sens transversal.

6. Machine d'usinage d'essieux montés en fosse, plus précisément tour à trains de roues en fosse, conforme à l'une des revendications 1 à 5,
ayant pour caractéristique
que les deux pièces (3A, 3B) du bâti de machine (3) sont toutes deux équipées d'un logement de palier (27) permettant leur déplacement dans le sens transversal.

7. Machine d'usinage d'essieux montés en fosse, plus précisément tour à trains de roues en fosse, conforme à l'une des revendications 1 à 6,
ayant pour caractéristique
qu'un porte-galets (7A) est affecté à la première pièce (3A) du bâti de machine (3) et que l'autre porte-galets (7B) est affecté à la deuxième pièce (3B) du bâti de machine (3).

8. Machine d'usinage d'essieux montés en fosse, plus précisément tour à trains de roues en fosse, conforme à l'une des revendications 1 à 7,
ayant pour caractéristique
qu'au moins deux galets de friction (8) sont montés sur le premier porte-galets (7A) avec une possibilité de rotation, et qu'au moins deux galets de friction (8) sont montés sur le deuxième porte-galets (7B) avec une possibilité de rotation.

9. Machine d'usinage d'essieux montés en fosse, plus précisément tour à trains de roues en fosse, conforme à l'une des revendications 1 à 8,
ayant pour caractéristique
que le tour à trains de roues en fosse (1') dispose d'au moins un entraînement (28) pour le réglage de l'écart entre les deux pièces (3A, 3B) du bâti de machine (3).

10. Machine d'usinage d'essieux montés en fosse, plus précisément tour à trains de roues en fosse, conforme à la revendication 9,
ayant pour caractéristique
que l'entraînement (28) est équipé d'un vérin hydraulique.

11. Machine d'usinage d'essieux montés en fosse, plus précisément tour à trains de roues en fosse, conforme à l'une des revendications 1 à 10,
ayant pour caractéristique
que le déplacement de l'une et/ou des deux pièces (3A, 3B) du bâti de machine (3) crée une plage de réglage (B) pouvant aller jusqu'à 700 mm, plus précisément une plage de réglage (B) comprise entre 50 et 700 mm.
